# EUROPEAN PATENT APPLICATION

(11) **EP 1 495 946 A2**
(43) Date of publication of application: **12.01.2005**
(21) Application number: 04076993.7
(22) Date of filing: 09.07.2004
(51) Int. Cl.: B62D 25/20

(54) **Floor for a vehicle, in particular for a minibus**

(30) Priority: 11.07.2003 NL 1023890
(71) Applicant: Auto-Interieur Beheer B.V., 7545 MV Enschede (NL)
(72) Inventor: Weersink, René Tarcisius Wiro, 7522 HE Enschede (NL)
(74) Representative: Dorna, Peter

(57) **Abstract**

The invention relates to a vehicle (1) comprising a bottom plate with a floor (4) attached thereto, to which mounting elements (5) are connected for interlocking engagement with seats (6) to be detachably connected to the floor (4), wherein the floor (4) is at least substantially made of a non-metallic material. Preferably, the floor (4) is substantially made of wood, more specifically of wood fibres.

## Description

The invention relates to a vehicle comprising a bottom plate with a floor attached thereto, to which mounting elements are connected for interlocking engagement with seats to be detachably connected to the floor.

In vehicles, in which connection in particular, but not exclusively, minibuses are considered within the framework of the invention, it is usually desirable that the interior arrangement of such a vehicle can be adapted to the specific usage thereof, in which connection especially the transportation of passengers is considered within the framework of the invention. For taxi companies, for example, which use minibuses, it is generally desirable to have the interior of such a minibus fitted with a maximum number of seats at one moment, whilst conversely such seats must be removed at another moment so as to be able to transport a wheelchair with a wheelchair user seated therein. To enable such a conversion, minibuses are generally fitted with a special floor, to which seats, or also wall-mounted folding chairs, securing strap systems for wheelchairs and three-point seat belt attachment systems can be detachably connected, which connections must meet the regulations that are in force in this regard, and which inter alia serve to prevent a seat from becoming detached from the floor or the entire floor from becoming detached from the vehicle upon being subjected to the large forces that may occur in the case of an accident.

Such a special floor is known, at least from International patent application WO 99/25601 A1. A vehicle fitted with a floor as described in WO 99/25601 A1 meets the requirements as referred to in the introduction.

Referring more specifically to figures 8-10 of WO 99/25601 A1, the known floor concerns a modular system consisting of interconnected sections of extruded aluminium. The sections are closed, having a flat bottom side and a flat upper side, which are interconnected by vertical ribs. The modular system furthermore comprises extruded aluminium sections provided with a dovetail key, into which elongated inserts can be inserted, to which inserts seats can subsequently be connected. Consequently, the width dimension of the closed sections determines the user's freedom in positioning the inserts at transverse floor positions, and consequently in positioning the seats.

Of course it is very important that the modular floor be securely attached to the bottom plate and that a secure (detachable) connection be obtained between the seats and the inserts, whilst in addition the inserts must not become detached from the floor. Standardized requirements exist in this regard. In the end it must be demonstrated that a floor meets said requirements. It is no doubt for that reason, and in view of the general aim to design a floor to have a minimum weight, that the modular floor system is built up of extruded aluminium sections in the embodiment of the floor as described in WO 99/25601 A1. Although such aluminium sections are highly functional, an important drawback is the high cost price thereof. The object of the invention is to reduce said cost price significantly without rendering it impossible to meet to the applicable requirements. In order to accomplish that object, the vehicle according to the invention is in the first place characterized in that the floor is at least substantially made of a non-metallic material. Such materials are generally significantly less expensive than metallic materials, in particular aluminium, and in addition the weight of the floor made of such a non-metallic material can be kept within bounds, comparable to the weight of a floor according to the prior art, which is made of extruded aluminium sections. In addition, the use of a non-metallic material for the floor does not stand in the way of meeting the applicable requirements as regards strength. Preferably, the floor is substantially made of wood, more preferably of wood fibres. Such a material is available at relatively low cost, it has a relatively low specific weight and in addition it is easy to work.

In order to prevent or at least reduce the need to damage the bottom plate, for example by drilling holes therein for attaching the floor to the bottom plate, it is highly preferable to glue the floor to the bottom plate. Insofar as experiments should show that such a glued joint between the floor and the bottom plate is inadequate, said glued joint may be combined with other jointing techniques, for example locally bolting the floor to the bottom plate.

In particular for the purpose of glueing the floor to the bottom plate, it is highly preferable for the floor to have an at least substantially closed bottom side, so that a maximum contact area with the adhesive layer is obtained or a maximum freedom as regards the positions at which glue is applied in those cases in which it is not necessary to apply glue to the entire floor area.

Especially for the purpose of connecting the mounting elements to the floor, it is highly preferable for the floor to be provided with recesses extending parallel to said mounting elements. Such recesses may either be open, as a result of which a slot is formed, as it were, or closed. By making use of said recesses for connecting the mounting elements, a great freedom is obtained as regards the possible transverse positions at which the mounting elements can be provided.

When open recesses are used, said open recesses have preferably been formed by locally removing material from a floor part where originally at least one closed recess was present. The main advantage of this is the fact that a maximally uniform basic embodiment of the floor is used, and that provisions may be made that make it possible to connect a mounting element to the floor even after the floor has been mounted in a vehicle.

A very suitable and uncomplicated manner of connecting the mounting elements to the floor is obtained if the mounting elements are at least partially accommodated in recesses in a form-locked manner.

Alternatively, or in combination, it is also advantageously possible within the framework of the invention for elongated stiffening elements to be accommodated in recesses in a form-locked manner. Such stiffening elements impart greater (flexural) stiffness to the floor, which may be necessary in those cases in which the floor is not stiff enough without such stiffening elements.

An important advantage of the preferred embodiment in which the stiffening elements are only present at or near the transverse positions of the seats to be connected to the floor, is the fact that the stiffness can thus be locally increased, so that it is possible to realise said increased stiffness only at locations where an increased stiffness is required.

In addition to being used for (locally) increasing the stiffness of the floor, the stiffening elements may also be very suitably used in those cases in which the mounting elements are attached to the stiffening elements, preferably by means of screwed connections. When closed recesses are used, within which the stiffening elements are accommodated, such screwed connections are logically realised via floor material that surrounds the recesses.

In order to be able to produce a floor of random dimensions and shapes in a simple manner, in which connection recesses for accommodating wheel housings may be considered, the floor is preferably composed of a number of interconnected, elongate floor members, which are preferably glued together along their longitudinal sides or interconnected in a different manner, preferably by means of a mechanical connection, for example, such as in particular a snap connection.

Furthermore preferably, the floor members have been produced by means of an extrusion process.

The invention will be explained in more detail hereinafter in the description of a number of non-limitative preferred embodiments of the invention, in which reference is made to the following figures.
Figure 1 is a top plan view of a vehicle according to the invention, which is shown without a roof.
Figure 2 is a vertical cross-sectional view of a first embodiment of a floor that may be used in a vehicle according to the invention.
Figure 3 is a vertical cross-sectional view of a second embodiment of a floor in that may be used in a vehicle according to the invention.
Figure 4 is a vertical cross-sectional view of a third embodiment of a floor in that may be used in a vehicle according to the invention.

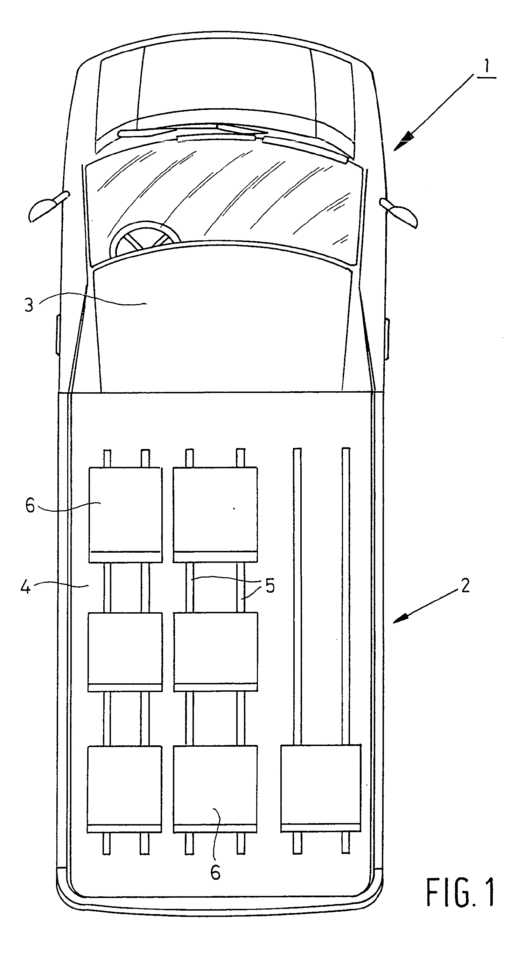

The vehicle 1 that is shown in figure 1 is a minibus with a passenger cabin 2 behind the driver's position 3. In the passenger cabin 2, a floor 4 is present on the bottom plate, to which floor a number of mounting sections 5 are secured, which sections extend parallel to each other in the direction of movement of the vehicle 1. Seats 6 can be detachably connected to the floor 4 by means of said mounting sections. This system makes it fairly easy to arrange the passenger cabin 2 in dependence on the nature of the objects to be transported. If said objects are goods, all seats 6 can easily be removed from the passenger cabin 2. On the other hand it is also possible to fit the passenger cabin 2 with a smaller number of seats 6, so that it is possible, for example, to transport one or more wheelchairs as well.

It will be understood that it is very important that the seats 6 be connected to the remaining part of the vehicle 1 in a reliable and safe manner. Specific requirements apply in this regard, and various mechanical tests are carried out in order to determine whether said requirements are met.

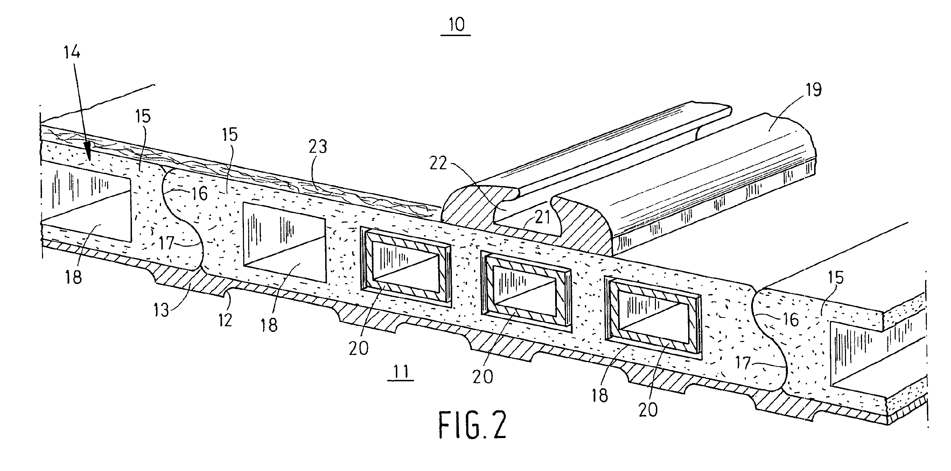

Figure 2 shows a first embodiment of a floor system 10 that can be used with a vehicle according to the invention. A floor 14 is connected to the bottom plate 11 of the vehicle 1, which has a profiled upper side 12, via an adhesive layer 13. Insofar as the strength of the joint that is realised via the adhesive layer 13 should fail to meet the prevailing requirements, it is also possible within the framework of the invention to use other jointing techniques, such as screwed joints, for attaching the floor 14 to the bottom plate 11, and it is even possible within the framework of the present invention not to use glueing or cementing techniques for attaching the floor 14 to the bottom plate 11, although such techniques are preferred as such, since it is not necessary in that case to carry out any destructive operations on the bottom plate 11, which might lead to a diminished resistance to corrosion of the bottom plate, for example.

The floor 14, only a limited part of which is shown in figure 2, is built up of a number of extruded sections 15, only one of which is fully shown in cross-sectional view in figure 2. Each extruded section 15 comprises two longitudinal edges 16, 17 of complementary cross-sectional shape, so that adjacent extruded sections fit together. In this case the longitudinal edges 16, 17 are sinusoidal, but also other shapes are quite conceivable. Before the floor 14 is glued to the bottom plate 11 via the adhesive layer 13, the extruded sections 15 are first glued together via their longitudinal edges 16, 17 and made to size, for example by forming recesses in the floor 14 for accommodating wheel housings of the vehicle 1. Alternative jointing techniques may be used for interconnecting the extruded sections, in which connection in particular snap connections may be considered, which can be realised in a simple manner by suitable profiling the longitudinal edges.

Each extruded section 15 is provided with a number of closed passages 18. The extruded sections 15 are made of extruded wood fibres, which are kept together by means of a suitable binder.

Elongated rail guides 19 are present straight above a passage 18 of the floor 14 at desired positions on the floor 14. The rail guides 19 are comparable to the mounting sections 5 in figure 1. Metal sleeves 20 are inserted in the passage 18, straight below the rail guide 19, as well as in the adjacent passages 18. Said sleeves 20 impart additional stiffness to the floor 14 in the direct vicinity of the rail guides 19, i.e. at the location at which greater stiffness is desirable for safety reasons. In addition to that, a connection between the floor 14 and the rail guides 19 can be effected in a simple manner via the sleeve 20 positioned directly below the rail guide 19 by simply bolting the rail guides 19 in place via the bottom 21 of recesses 22 present therein, in which case the bolts in question will extend through the part of the floor 14 that is present between the rail guides 19 and the sleeve below under said rail guides. It will be apparent to those skilled in the art that besides sleeves 20 also differently shaped elongated stiffening elements may be used, in which connection in particular sections of inverted U-shape may be considered. The floor 14 is finished with a floor covering 23 that is provided between the rail guides 19.

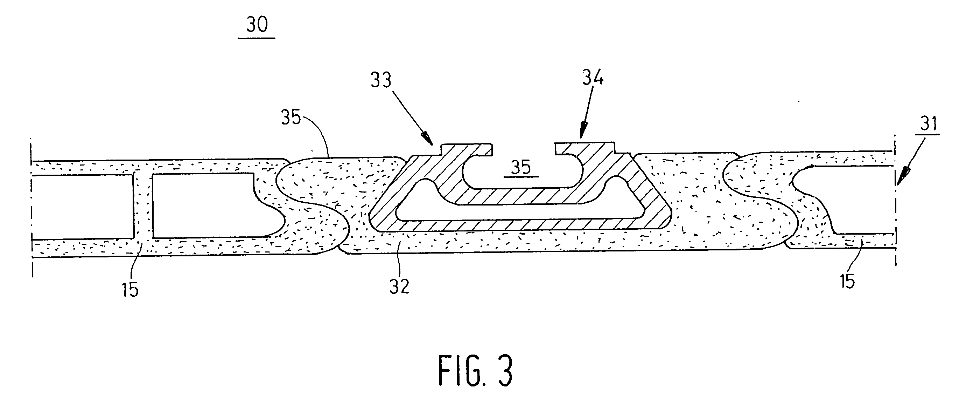

The floor system 30 that is shown in figure 3 is to a significant degree comparable to the floor system 10 that is shown in figure 2. An important difference, however, is the fact that the extruded sections 15 (similar to the sections that are shown in figure 2) are combined with extruded sections 32 in a floor 31. The extruded sections 32 have a dovetailed key 33, in which a rail guide 34 is inserted to provide a form-locked connection, so that the recess 35 in the rail guide 34 can extend at least partially within the height of the floor 31, so that the rail guide 34 will only project from the upper surface 35 of the extruded sections 15, 32 to a limited extent, or not at all. The material of the extruded sections 32 may be the same as the material of the extruded sections 15, although it is also conceivable to form the extruded section 32 of a higher-grade material, in particular as regards the strength thereof, because of the more stringent requirements as to strength that apply in the vicinity of the rail guide 34.

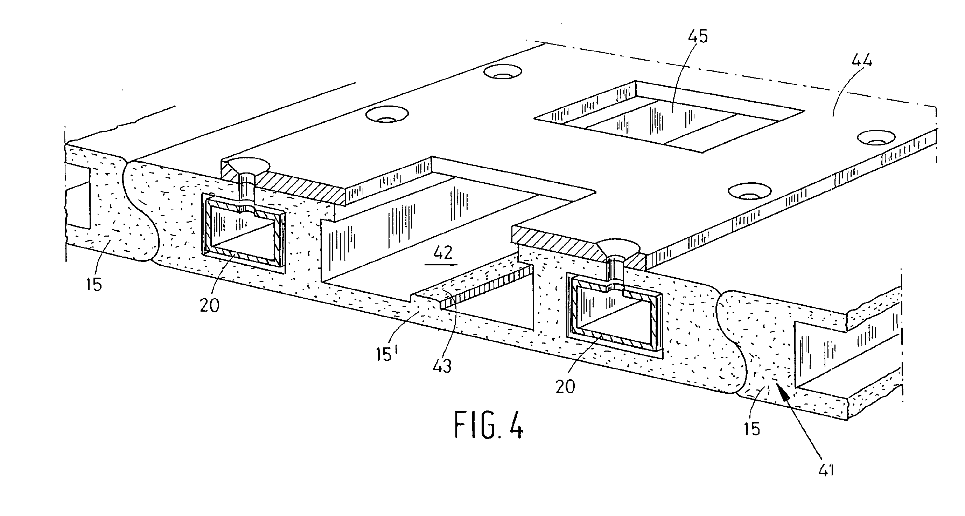

The floor system 40, too, uses glued-together extruded sections 15. At the location of positions in transverse direction at which seat legs are to be secured to the floor 41 of the floor system 40, the extruded sections 15 have been worked to form extruded sections 15', however. Said working implies that material has been removed from the upper side of the extruded sections 15 over the width as well as over the height of the two middle passages 18, as a result of which a recess 42 being open at the upper side is formed at that location. Figure 4 shows the remaining lower portion 43 of the wall between the original two middle passages 18. Sleeves 20 are inserted in the outer passages 18 of the extruded section 15'. An elongated metal strip 44 is mounted on top of the extruded section 15', which strip is bolted to the sleeves 20 at evenly spaced-out positions along its longitudinal edges. Square holes 45 are formed in the strip at evenly spaced-out positions, via which holes access can be gained to the recess 42 from above. By using the strips 44 provided with holes 45, seats 6 can be connected to the floor, and thus to the bottom plate 11 of a vehicle 1, in a manner which is known per se to those skilled in the art.

It is important to note that transmission of forces between the seats 6 and the bottom plate 11 is possible with all the floor systems that are described above or generally within the framework of the invention.

## Claims

1. A vehicle comprising a bottom plate to which a floor is attached to which mounting elements are connected for interlocking engagement with seats to be detachably connected to the floor, **characterized in that** the floor is at least substantially made of a non-metallic material.

2. A vehicle according to claim 1, **characterized in that** the floor is substantially made of wood.

3. A vehicle according to claim 2, **characterized in that** the floor is substantially made of wood fibres.

4. A vehicle according to claim 1, 2 or 3, **characterized in that** the floor is at least partially glued to the bottom plate.

5. A vehicle according to claim 1, 2, 3 or 4, **characterized in that** the floor has an at least substantially closed bottom side.

6. A vehicle according to claim 1, 2, 3, 4 or 5, **characterized in that** the floor is provided with recesses extending parallel to the mounting elements.

7. A vehicle according to claim 6, **characterized in that** said recesses are at least partially open at the upper side of the floor and that said recesses have been formed by locally removing material from a part of the floor where originally at least one closed recess was present.

8. A vehicle according to claim 6 or 7, **characterized in that** said mounting elements are at least partially accommodated in recesses in a form-locked manner.

9. A vehicle according to claim 6, 7 or 8, **characterized in that** elongated stiffening elements are accommodated in recesses in a form-locked manner.

10. A vehicle according to claim 9, **characterized in that** said stiffening elements are only present at or near the transverse positions of the seats to be connected to the floor.

11. A vehicle according to claim 9 or 10, **characterized in that** the mounting elements are fixed to the stiffening elements.

12. A vehicle according to claim 11, **characterized in that** the mounting elements are fixed to the stiffening elements by means of screwed connections.

13. A vehicle according to any one of the preceding claims, **characterized in that** the floor is composed of a number of interconnected elongate floor members.

14. A vehicle according to claim 13, **characterized in that** said floor members are glued together along the longitudinal sides.

15. A vehicle according to claim 13 or 14, **characterized in that** said floor members have been produced by means of an extrusion process.
